# EUROPÄISCHE PATENTANMELDUNG

(11) **EP 4 759 571 A1**
(43) Veröffentlichungstag der Anmeldung: **17.06.2026**
(21) Anmeldenummer: 25221791.4
(22) Anmeldetag: 09.12.2025
(51) Int. Cl.: B60D 1/62, B60D 1/64

(54) **ZUGFAHRZEUG, KOMBINATION UND VERFAHREN ZUM HERSTELLEN EINER MEDIENVERBINDUNG**

(30) Priorität: 10.12.2024 DE 102024136865
(71) Anmelder: JOST-Werke Deutschland GmbH, 63263 Neu-Isenburg (DE)
(72) Erfinder: BASTRON, Alexander, 64285 Darmstadt (DE); ALGÜERA GALLEGO, Jose Manuel, 63739 Aschaffenburg (DE)
(74) Vertreter: WSL Patentanwälte Partnerschaft mbB

(57) **Zusammenfassung**

Zugfahrzeug (20) mit einer Mehrzahl von Steckverbindern (44) zur Übertragung jeweils eines Mediums, die mit Steckbuchsen (46) eines gezogenen Fahrzeugs (30) verbunden werden können, ferner mit einer Handhabungseinrichtung (60).

## Beschreibung

Die vorliegende Erfindung betrifft ein Zugfahrzeug, eine Kombination aus mehreren Steckern und einer Handhabungseinrichtung sowie Verfahren zum Herstellen einer Medienverbindung zwischen einem Zugfahrzeug und einem gezogenen Fahrzeug.

Zugfahrzeuge werden in einem Gespann eingesetzt, um ein gezogenes Fahrzeug zu bewegen. Beispiele für gezogene Fahrzeuge sind Sattelauflieger, Anhänger und Wechselbrücken.

Ein Sattelschlepper und ein Sattelauflieger bilden einen Sattelzug, bei dem das mechanische Kupplungssystem eine auf dem Sattelschlepper angeordnete Sattelkupplung und einen an der Unterseite des Sattelaufliegers befindlichen, mit der Sattelkupplung in Eingriff bringbaren und verriegelbaren Königszapfen aufweist. Die Sattelkupplungsplatte ist zum Ankuppeln des Sattelaufliegers üblicherweise mit einer in Fahrtrichtung keilförmig zulaufenden Einfahröffnung ausgebildet, wobei die Einfahröffnung einen freien Bauraum mit mindestens einer Bauraumtiefe aufweist, die ein Ein- und Ausfahren des Königszapfens in die Sattelkupplung gewährleistet. Während des Ankuppelns gleitet der Sattelauflieger hinsichtlich seiner vertikalen Ausrichtung auf der Oberfläche der Sattelkupplungsplatte. Die seitliche Führung wird über den Königszapfen gewährleistet, der während des Ankuppelns in der Einfahröffnung bis zum Erreichen seiner Verriegelungsposition zwangsgeführt ist. Ein Verfahren zum Kuppeln von Sattelzugmaschine und Sattelauflieger ist aus der KR 20200060650 A bekannt.

Analog dazu bilden ein Motorwagen und ein Anhänger einen Gliederzug, bei dem das mechanische Kupplungssystem eine dem Motorwagen zugeordnete Anhängekupplung oder Bolzenkupplung mit Fangmaul und eine dem Anhänger zugeordnete Deichsel mit Zugöse aufweist.

Solche Gespanne sind für den Warentransport von großer Bedeutung. Dabei ist es üblich, dass ein Zugfahrzeug und ein gezogenes Fahrzeug kein unveränderbares Gespann bilden, sondern je nach Bedarf ein Zugfahrzeug mit verschiedenen gezogenen Fahrzeugen gleicher Art verbunden werden kann. Am Ende einer Fahrt stellt das Zugfahrzeug das gezogene Fahrzeug üblicherweise ab. Während das gezogene Fahrzeug be- oder entladen wird, kann mit dem Zugfahrzeug ein anderes gezogenes Fahrzeug bewegt werden. Zugfahrzeug und gezogenes Fahrzeug werden also regelmäßig verbunden und getrennt. Dadurch gibt es im Allgemeinen mehr gezogene Fahrzeuge als Zugfahrzeuge. Damit Sattelauflieger abgestellt werden können, weisen sie in der Regel Stützwinden auf, welche die Stützfunktion übernehmen, während kein Sattelschlepper mit dem Sattelauflieger gekuppelt ist.

Gespanne werden sowohl in kontrollierten Umgebungen, wie beispielsweise einem Containerterminal, als auch in öffentlichen Umgebungen, also auf Straßen, eingesetzt. In den kontrollierten Umgebungen herrschen oftmals Bedingungen, die enger eingrenzbar sind. Es gibt dort also weniger Störeinflüsse wie Verkehrsteilnehmer, die nicht Teil des Warentransportsystems sind, Unebenheiten, überraschende Straßensperrungen, etc. Dafür sind die Anforderungen an die Zuverlässigkeit innerhalb kontrollierter Umgebungen wesentlich höher.

Das manuelle Koppeln eines Zugfahrzeugs mit einem Sattelauflieger ist ein mehrstufiger und zeitaufwendiger Prozess, bei dem mehrere Verbindungen manuell hergestellt werden müssen. Zunächst wird das Zugfahrzeug rückwärts an den Auflieger herangefahren, bis die Sattelkupplung den Königszapfen des Aufliegers aufnimmt. Ein hörbares Einrasten signalisiert, dass die mechanische Verbindung hergestellt ist. Anschließend erfolgt eine Sichtkontrolle, um sicherzustellen, dass die Verriegelung der Sattelkupplung korrekt geschlossen ist.

Neben der mechanischen Verbindung werden das Zugfahrzeug und das gezogene Fahrzeug zur Übertragung verschiedener Medien, insbesondere Druckluft und elektrischer Energie, miteinander verbunden. In jüngerer Vergangenheit erfolgte zunehmend auch eine Datenverbindung zwischen Zugfahrzeug und gezogenem Fahrzeug. Für die Übertragung der Medien weisen die Fahrzeuge oftmals Stecker und Steckbuchsen auf, die an entsprechenden Medienleitungen angebracht werden können und die miteinander verbindbar sind.

Der manuelle Verbindungsprozess der Medienanschlüsse ist aufwendig und fehleranfällig. So ist bei pneumatischen Verbindungen darauf zu achten, dass die Anschlüsse dicht sitzen, um Druckluftverluste zu vermeiden. Die elektrischen Verbindungen zwischen Zugfahrzeug und Auflieger erfolgen über separate Stecker, meist 7-polig oder 15-polig, für die Beleuchtung und gegebenenfalls über weitere Steckverbindungen für Steuergeräte wie ABS oder EBS. Diese Stecker müssen einzeln angeschlossen und auf korrekten Sitz geprüft werden. Dabei muss eine Person zwischen die Fahrzeuge klettern und die Leitungen manuell handhaben. Abgesehen davon, dass der Bereich zwischen den Fahrzeugen oft schmutzig ist, gibt es dort auch Verletzungsrisiken. Falls der Auflieger über zusätzliche Systeme wie Hydraulik oder Kameras verfügt, werden entsprechende Datenleitungen ebenfalls manuell verbunden.

Nachdem alle Verbindungen hergestellt sind, folgt eine Funktionsprüfung. Hierbei wird die Beleuchtung des Aufliegers getestet, ebenso die Bremsen sowie eventuelle Zusatzsysteme wie Hydraulik oder Telematik.

Dieser Prozess ist jedoch mit verschiedenen Nachteilen verbunden. Der manuelle Aufwand ist hoch, da jede Verbindung einzeln angeschlossen und geprüft werden muss, was besonders bei schlechten Witterungsbedingungen oder unter Zeitdruck problematisch sein kann. Die Vielzahl an separaten Verbindungen erhöht zudem das Risiko von Fehlern, wie beispielsweise vergessene oder nicht korrekt gesteckte Leitungen. Dies kann zu Funktionsausfällen führen, etwa bei der Beleuchtung oder den Bremsen, und somit die Verkehrssicherheit gefährden.

Das Anbringen und Abnehmen der Übertragungsleitungen ist somit eine zeitaufwendige Maßnahme, die oft manuell durchgeführt wird. Daher gab es in der Vergangenheit verschiedene Ansätze, um diese Probleme zu verringern oder zu vermeiden.

Ein Ansatz bestand darin, verschiedene Verbindungen in einen einzigen Stecker zu kombinieren. Dadurch wird die Anzahl der Steckvorgänge reduziert. Die Verwendung von kombinierten Steckverbindungen zwischen Zugfahrzeug und Sattelauflieger bietet Vorteile, sowohl hinsichtlich der Funktionalität als auch der Effizienz. Indem verschiedene Verbindungsarten in einem einzigen Stecker zusammengeführt werden, können Platz und Material eingespart sowie der Aufwand für die Herstellung und Wartung reduziert werden. Besonders in der Logistik, wo schnelles und zuverlässiges Koppeln entscheidend ist, wird die Handhabung durch kombinierte Stecksysteme erheblich vereinfacht. Das Risiko, Verbindungen falsch zu stecken oder eine Verbindung zu vergessen, sinkt deutlich, da nur ein Stecker für alle notwendigen Verbindungen genutzt wird. Zudem wird durch die Integration in einem Gehäuse ein besserer Schutz vor äußeren Einflüssen wie Schmutz, Feuchtigkeit und mechanischen Belastungen gewährleistet. Insgesamt sorgt die Kombination verschiedener Verbindungen in einem Stecker für eine höhere Zuverlässigkeit, eine vereinfachte Handhabung und letztlich auch für wirtschaftliche Vorteile im Betrieb.

Darüber hinaus wurde versucht, das Verbinden der Fahrzeuge hinsichtlich einer Übertragung von Medien wie Druckluft, elektrischer Energie und Daten zu automatisieren. Systeme zur Automatisierung, bei denen auch kombinierte Stecker mit mehreren Medienanschlüssen zum Einsatz kommen, sind aus EP 2 013 040 A1, WO 2022/150720 A2 und US 11,560,188 B2 bekannt. Diese Systeme sind jedoch anfällig gegenüber Umwelteinflüssen wie Regen oder Schmutz. Zudem ist fraglich, inwieweit die Verbindung, wie sie in Figur 3c der US 11,560,188 B2 gezeigt ist, einerseits flexibel genug ist, um Bewegungen des Aufliegers gegenüber dem Zugfahrzeug mitzumachen, und andererseits starr genug ist, damit die Steckverbindung überhaupt automatisch hergestellt werden kann.

Es ist anzunehmen, dass die Anforderungen an die Übertragung von Medien zwischen Zugfahrzeug und gezogenem Fahrzeug noch weiter ansteigen. Mit der Zunahme autonom fahrender Gespanne und dem vermehrten Einsatz von Rekuperationssystemen und elektrischen Fahrantrieben müssen insbesondere Daten und elektrische Energie dauerhaft schnell, zuverlässig und sicher übertragen werden können. Hierbei stoßen bisherige Systeme mitunter an ihre Grenzen.

Es ist daher Aufgabe der Erfindung, die Übertragung von Medien zwischen Zugfahrzeug und gezogenem Fahrzeug auch bei hohen Anforderungen an die Übertragungsleistung sicher zu gewährleisten.

Diese Aufgabe wird durch Zugfahrzeug nach Anspruch 1 gelöst.

Das Zugfahrzeug umfasst ein Fahrwerk und einen Aufbau sowie eine Mehrzahl von Steckverbindern zur Übertragung jeweils eines Mediums zwischen dem Zugfahrzeug und einem gezogenen Fahrzeug, insbesondere zur Übertragung jeweils genau eines Mediums oder jeweils mehrerer Medien zwischen dem Zugfahrzeug und einem gezogenen Fahrzeug. Die Steckverbinder sind zu mehreren separaten Steckern zusammengefasst, die mit Steckbuchsen des gezogenen Fahrzeugs verbunden werden können. Die Anzahl der Stecker ist kleiner ist als die Anzahl der Steckverbinder. Das Zugfahrzeug umfasst eine Handhabungseinrichtung, die eingerichtet ist, die Stecker einzeln handzuhaben.

Mit anderen Worten beträgt die Anzahl der Stecker mindestens zwei und die Anzahl der Steckverbinder mindestens drei. Mindestens ein Stecker weist demnach mindestens zwei Steckverbinder auf.

Jeder Steckverbinder ist an eine Leitung für ein Medium angeschlossen. In den Steckbuchsen sind ebenfalls Steckverbinder vorgesehen, wobei die Steckverbinder einer jeden Steckbuchse komplementär zu den Steckverbindern mindestens eines Steckers ausgebildet sind.

Die Erfinder haben erkannt, dass eine Integration aller Verbindungsarten in einen Stecker nicht immer möglich oder sinnvoll ist. Mit jeder hinzukommenden Verbindung nehmen Volumen und Gewicht eines Steckers zu. Das erhöht die Anforderungen an die Handhabungseinheit, welche den Stecker handhabt. Zudem können sich die verschiedenen übertragenen Medien negativ beeinflussen. Besonders ist dies bei der Kombination einer Hochspannungsleitung mit einer Datenleitung zu beobachten. Die Hochspannungsleitung führt zu Interferenzen und Datenverlust innerhalb der Datenleitung, was die Datenübertragung nachhaltig stören kann. Wenn diese Medien in einem gemeinsamen Stecker übertragen werden sollen, wäre eine starke Abschirmung nötig, die Volumen und Stecker weiter vergrößert.

Anders als bei bisherigen Systemen ist daher vorgesehen, dass mindestens zwei Stecker vorgesehen sind, die unabhängig voneinander gesteckt werden, von denen aber mindestens ein Stecker mehrere Medien überträgt. Die Steckverbinder für Medien, die sich negativ beeinflussen, können dadurch in unterschiedlichen Steckern vorgesehen werden. Zudem ist das maximale Gewicht, welches die Handhabungseinrichtung tragen muss, geringer. Die Handhabungseinrichtung kann somit filigraner ausgestaltet werden, wodurch Platz und Kosten eingespart werden.

Das Fahrwerk umfasst insbesondere einen Fahrzeugrahmen, Räder und einen Antrieb. Der Aufbau umfasst insbesondere eine Sattelkupplung. Der Aufbau kann eine Fahrerkabine umfassen. Bei einem autonomen Zugfahrzeug kann diese jedoch entfallen.

Das Zugfahrzeug umfasst bevorzugt eine Steuereinheit zum Ansteuern der Handhabungseinrichtung. Die Ansteuerung erfolgt bevorzugt teil- oder vollautomatisch.

Ein einzelner Steckverbinder kann beide Pole einer elektrischen Verbindung umfassen.

Unter Handhaben wird insbesondere das Aufnehmen, Bewegen, Drehen, Ablegen, Stecken und/oder Herausziehen eines Steckers verstanden.

Wie oben erwähnt, ist die Handhabungseinrichtung eingerichtet, die Stecker einzeln handzuhaben. Hierzu umfassen die Handhabungseinrichtung und die Stecker bevorzugt komplementäre Haltemittel. Genauer gesagt umfassen die Handhabungseinrichtung die Stecker jeweils ein Haltemittel, wobei die Haltemittel der Stecker jeweils einzeln komplementär zu dem Haltemittel der Handhabungseinrichtung sind. Mittels den Haltemitteln kann die Handhabungseinrichtung temporär mit jeweils einem einzigen Stecker verbunden werden. Komplementär bedeutet, dass ein Haltemittel der Handhabungseinrichtung und ein Haltemittel eines Steckers derart temporär miteinander verbunden werden können, dass die Handhabungseinrichtung den Stecker handhaben kann. Die Haltemittel sind dabei voneinander lösbar, sie können also bei bestimmungsgemäßem Gebrauch und insbesondere ohne menschliches Eingreifen voneinander getrennt werden.

Die Haltemittel können durch eine Kontur oder eine Teilkonturen des Steckers, insbesondere des Steckergehäuses, gebildet werden. Dadurch wird der Aufbau der Stecker vereinfacht. Weisen die Stecker alle die gleiche Kontur oder Teilkontur auf, so können sie von ein und derselben komplementären Handhabungseinrichtung gehandhabt werden.

Die Stecker weisen bevorzugt identische Haltemittel auf. In diesem Fall ist es ausreichend, wenn die Handhabungseinrichtung ein einziges Haltemittel umfasst, welches mit dem jeweils identisch ausgebildeten Haltemittel des Steckers komplementär ausgebildet ist. Dadurch wird der Aufbau der Handhabungseinrichtung vereinfacht.

Die Haltemittel können beispielsweise mechanische und/oder magnetische Haltemittel sein. Entscheidend ist, dass die Haltemittel eine temporäre Verbindung, also ein Verbinden und ein Lösen von Handhabungseinrichtung und Stecker ermöglichen. Mechanische Haltemittel bewirken eine temporäre Verbindung von Handhabungseinrichtung und Stecker durch Formschluss und/oder Kraftschluss. Die Haltemittel können auch Rastelemente und/oder Aktuatoren umfassen. Magnetische Haltemittel können einen Dauermagneten und/oder einen Elektromagneten umfassen. Zu den Haltemitteln gehören beispielsweise Halter und Greifer, wobei der Greifer den Halter greifen kann. Der Greifer kann auch als Vakuumgreifer oder Magnetgreifer ausgebildet sein
Die Stecker umfassen bevorzugt eine Codierung, insbesondere eine eindeutige Codierung. Die Codierung ist bevorzugt bei den verschiedenen Steckern unterschiedlich (eindeutige Codierung). Hierdurch kann auf einfache Weise ermittelt werden, um welchen Stecker es sich handelt und welche Steckverbindungen dieser umfasst. Hierzu kann ein Sensor vorgesehen sein, insbesondere als Bestandteil der Handhabungseinrichtung. Der Sensor kann die Codierung erfassen. Eine Steuereinheit kann dann beispielsweise anhand einer Datenbank ermitteln, welche Steckverbindungen der Stecker mit der erfassten Codierung umfasst. Die Steuereinheit ist bevorzugt Teil des Zugfahrzeugs. Die Codierung ist bevorzugt Bestandteil der Haltemittel. Sie kann aber beispielsweise auch auf oder in einem Gehäuse des Steckers angeordnet sein. Die Codierung kann beispielsweise einen RFID-Chip, einen QR-Code, eine mechanische Codierung und/oder eine magnetische Codierung umfassen. Eine mechanische Codierung kann beispielsweise durch verschiedenartig ausgebildete Vorsprünge realisiert werden. Die verschiedenen Vorsprünge können von dem Sensor optisch oder mechanisch erfasst werden. Weisen die Stecker jeweils eine identische Teilkontur als Haltemittel auf, so kann ein anderer Teil der Kontur des Steckers, insbesondere des Steckergehäuses als Codierung dienen.

Die von den Steckverbindern übertragenen Medien sind insbesondere Druckluft, Hydraulikflüssigkeit, Daten und/oder elektrische Energie, insbesondere Energie eines Bordnetzes (12 V-Gleichspannung und/oder 24 V-Gleichspannung und/oder 48 V-Gleichspannung) und/oder Energie mit Hochspannung (> 230 V-Wechselspannung oder > 230 V-Gleichspannung, insbesondere 300 V oder 500 V Gleichspannung). Eine Datenübertragung wird nicht als Übertragung von elektrischer Energie verstanden, auch wenn dabei geringe Mengen an elektrischer Energie übertragen werden.

Wie bereits erwähnt, erfolgt die Übertragung der Energie mit Hochspannung und die Datenübertragung bevorzugt durch zwei unterschiedliche Stecker.

Die Steckverbinder sind jeweils entweder zur Übertragung genau eines Mediums zwischen dem Zugfahrzeug und dem gezogenen Fahrzeug oder zur Übertragung mehrerer Medien zwischen dem Zugfahrzeug und dem gezogenen Fahrzeug eingerichtet. In letzterem Fall ist insbesondere eine Übertragung von Daten in Kombination mit Druckluft oder elektrischer Energie vorgesehen. Die Daten werden hierzu bei der Übertragung der Druckluft oder der elektrischen Energie überlagert. Die Übertragung genau eines Mediums pro Steckverbinder schafft eine klare Trennung der Medien. Die Übertragung mehrerer Medien über einen Steckverbinder verringert die Anzahl der Steckverbinder und verkleinert so den zugehörigen Stecker. Dadurch kann die Handhabungseinrichtung filigraner ausgestaltet werden.

Die Steckverbinder eines Steckers sind vorteilhafterweise voneinander isoliert.

Welche Stecker mit welchen Steckverbindern ausgestattet sind, ist je nach Anwendungsfall in unterschiedlicher Weise realisierbar. Bevorzugt weist mindestens ein Stecker ausschließlich Steckverbinder zur Übertragung von Hochspannung auf. Vorteilhafterweise sind die Stecker hinsichtlich ihrer Steckverbinder und/oder des übertragenen Mediums unterschiedlich ausgestaltet. Um beispielsweise zu verhindern, dass sich eine Hochspannungsleitung und eine Datenleitung gegenseitig beeinflussen, kann ein erster Stecker mit der Hochspannungsleitung verbunden und mit einem entsprechenden Steckverbinder ausgestattet sein und ein zweiter Stecker ist mit einer Datenleitung verbunden und weist einen entsprechenden Steckverbinder auf. Soll zudem eine Übertragung von Druckluft ermöglicht werden, kann der erster Stecker oder der zweite Stecker zusätzlich einen Steckverbinder für Druckluft aufweisen und mit einer Druckluftleitung verbunden sein. Da Hochspannungsleitungen vergleichsweise schwer sind, ist vorteilhafterweise vorgesehen, dass mindestens ein Stecker ausschließlich einen Steckverbinder zur Übertragung von Hochspannung aufweist und mit der Hochspannungsleitung verbunden ist. Damit nicht sämtliche Vorteile einer Integration mehrerer Steckverbinder in weniger Stecker verloren geht, ist vorteilhafterweise vorgesehen, dass mindestens ein Stecker zur Übertragung mehrerer unterschiedlicher Medien ausgebildet ist.

Unter einem Steckverbinder wird insbesondere ein Element verstanden, welches mit einem anderen Steckverbinder durch einen Steckvorgang verbunden werden kann, insbesondere mechanisch und/oder magnetisch verbunden werden kann. Dabei ist nicht zwingend erforderlich, dass eine unmittelbare Kontaktierung der Bestandteile erfolgt, welche unmittelbar an der Übertragung des jeweiligen Mediums mitwirken. Beispielsweise können für eine Datenverbindung in den Steckverbindern ein Sender und ein Empfänger eines kontaktlosen Kommunikationssystems angeordnet sein, beispielsweise wie in WO 2020/016420 A2 offenbart. Auch in diesem Fall liegen zwei Steckverbinder vor.

Es ist im Rahmen der Erfindung möglich, dass mehrere Stecker vorgesehen sind, welche wenigstens teilweise die gleichen Medien in unterschiedlichen Kombinationen übertragen. Auf diese Weise kann das erfindungsgemäße System an verschiedene gezogene Fahrzeuge angepasst werden bzw. für diese vorbereitet sein. Beispielsweise wäre es möglich, drei unterschiedliche Stecker vorzusehen, von denen ein erster Stecker für die Übertragung einer Hochspannung, ein zweiter Stecker für die Übertragung von Druckluft und einer Niederspannung (Bordnetz) und ein dritter Stecker für die Übertragung von Druckluft, Niederspannung und Daten ausgebildet ist. Je nachdem, welche Art von gezogenem Fahrzeug an das Zugfahrzeug angeschlossen werden soll, kommt dann beispielsweise nur der zweite Stecker (Auflieger ohne Hochspannung und Datenanschluss) oder nur der dritte Stecker (Auflieger ohne Hochspannung, aber mit Datenanschluss) oder der erste und der dritte Stecker (Auflieger mit Hochspannung und Datenanschluss) oder eine andere Kombination zum Einsatz.

Die Handhabungseinrichtung arbeitet bevorzugt automatisch, insbesondere autonom. Sie umfasst bevorzugt einen Gelenkarmroboter. Dadurch wird die Handhabung, insbesondere die Aufnahme unterschiedlicher Stecker erheblich vereinfacht. Das Haltemittel der Handhabungseinrichtung ist bevorzugt an einem Ende der Handhabungseinrichtung, insbesondere an dem Ende des Gelenkarmroboters angeordnet. Dadurch weist die Handhabungseinrichtung den größtmöglichen Spielraum zur Handhabung der Stecker auf.

Das Zugfahrzeug umfasst vorteilhafterweise eine Halterung, an welchem die Stecker temporär angeordnet werden können. Dort können die Stecker angeordnet werden, wenn sie nicht in Benutzung sind, also insbesondere wenn sie nicht mit dem gezogenen Fahrzeug verbunden sind oder von der Handhabungseinrichtung gehandhabt werden. Sie werden dadurch an einem festen Ort zwischengelagert und sind dort für die Handhabungseinrichtung leicht auffindbar. Die Halterungen können an der Fahrerkabine angeordnet sein.

Die Aufgabe der Erfindung wird auch durch ein Gespann mit einem Zugfahrzeug gemäß der obigen Beschreibung und einem gezogenen Fahrzeug gelöst. Das gezogene Fahrzeug umfasst Steckbuchsen, mit denen die Stecker verbunden werden können. Die Steckbuchsen umfassen Steckverbinder, die mit Medienleitungen des gezogenen Fahrzeugs verbunden sind.

Die Übertragung eines Mediums von dem Zugfahrzeug zu dem gezogenen Fahrzeug erfolgt von einer Medienleitung des Zugfahrzeugs über den dazugehörigen Steckverbinder des Zugfahrzeugs, weiter über den dazugehörigen Steckverbinder des gezogenen Fahrzeugs zu der Medienleitung des gezogenen Fahrzeugs. Die Übertragung eines Mediums von dem gezogenen Fahrzeug zu dem Zugfahrzeug erfolgt von einer Medienleitung des gezogenen Fahrzeugs über den dazugehörigen Steckverbinder des gezogenen Fahrzeug, weiter über den dazugehörigen Steckverbinder des Zugfahrzeugs zu der Medienleitung des Zugfahrzeugs. Hierdurch kann beispielsweise bei Rekuperation von Energie durch elektrische Achsen des gezogenen Fahrzeugs elektrische Energie an einen Energiespeicher in dem Zugfahrzeug übertragen werden. Auch eine Übertragung in beide Richtungen ist möglich, beispielsweise im Falle von Signalübertragungen.

Das gezogene Fahrzeug ist bevorzugt ein Sattelauflieger, ein Anhänger oder eine Wechselbrücke.

Die Aufgabe der Erfindung wird auch durch eine Kombination aus mehreren Steckern und einer Handhabungseinrichtung wie oben definiert gelöst. Die Kombination ist auf einem Zugfahrzeug und/oder an einem gezogenen Fahrzeug anordenbar. Die Anordnung am Zugfahrzeug wird bevorzugt, da ein Fuhrpark in der Regel weniger Zugfahrzeuge als gezogene Fahrzeuge umfasst und daher der Kosteneinsatz geringer ist.

Die Aufgabe der Erfindung wird auch durch ein Verfahren zum Herstellen einer Medienverbindung zwischen einem Zugfahrzeug nach der obigen Beschreibung und einem gezogenen Fahrzeug gelöst, wobei die Stecker nacheinander von der Handhabungseinrichtung mit Steckbuchsen des gezogenen Fahrzeugs verbunden werden. Da die Stecker einzeln von der Handhabungseinrichtung gehandhabt werden, werden sie nacheinander mit dem gezogenen Fahrzeug verbunden.

Der Verbindungsvorgang für einen Stecker beginnt mit dem Aufnehmen des Steckers durch die Handhabungseinrichtung, wobei die Haltemittel von Handhabungseinrichtung und Stecker temporär miteinander verbunden werden. Der Verbindungsvorgang endet, wenn der Stecker mit der Steckbuchse des gezogenen Fahrzeugs verbunden ist und die Handhabungseinrichtung von dem Stecker gelöst wird, wobei die Haltemittel voneinander getrennt werden.

Die Handhabungseinrichtung ist ferner eingerichtet, den umgekehrten Vorgang durchzuführen. Das Trennen einer Verbindung zwischen Zugfahrzeug und gezogenem Fahrzeug beginnt mit dem temporären Verbinden der Haltemittel von Stecker und Handhabungseinrichtung. Danach wird der Stecker aus der Steckbuchse gezogen und an einem vorgesehenen Ort abgelegt, beispielsweise an der Halterung. Beim Ablegen werden Stecker und Handhabungseinrichtung bzw. ihre Haltemittel voneinander getrennt, wodurch der Vorgang beendet ist.

Der Verbindungsvorgang und der Trennungsvorgang der Medienübertragung können vor, während oder nach dem jeweiligen mechanischen Vorgang erfolgen.

Um den Anforderungen an autonom fahrende Gespanne gerecht zu werden, ist ein Datenaustausch zwischen Zugfahrzeug und gezogenem Fahrzeug von großer Bedeutung. Bei vorteilhaften Weiterbildungen ist daher vorgesehen, dass als erster Stecker ein Stecker mit dem gezogenen Fahrzeug verbunden wird, der eine Datenübertragung zwischen Zugfahrzeug und gezogenem Fahrzeug ermöglicht. Dies kann ein reiner Datenstecker sein oder ein kombinierter Stecker mit u.a. einem Datensteckverbinder. Auf diese Weise kann zu einem frühen Zeitpunkt ein Datenaustausch zwischen Zugfahrzeug und gezogenem Fahrzeug stattfinden. Hierdurch kann beispielsweise ein autonom fahrendes Zugfahrzeug Informationen von dem gezogenen Fahrzeug erhalten, insbesondere über dessen Aufbau und Zustand. Vorteilhafterweise wird nach dem Ermöglichen der Datenübertragung in Abhängigkeit von Daten, welche von dem gezogenen Fahrzeug an das Zugfahrzeug übermittelt werden, festgelegt, welche Stecker im Anschluss und in welcher Reihenfolge mit dem gezogenen Fahrzeug verbunden werden. Nach der hergestellten Datenverbindung kann das Zugfahrzeug also ermitteln, welche weiteren Verbindungen nötig sind und ob es eine bevorzugte Reihenfolge für deren Verbindung gibt. Diese Vorgehensweise erleichtert den Verbindungsvorgang zwischen Zugfahrzeug und gezogenem Fahrzeug, da nicht vorab alle Informationen vorliegen müssen.

Nach dem Ermöglichen der Datenübertragung können vorteilhafterweise einzelne oder alle Verbraucher elektrischer Energie mittels der Datenübertragung deaktiviert werden und erst danach wird ein Stecker mit dem gezogenen Fahrzeug verbunden, der eine Übertragung von elektrischer Energie zwischen Zugfahrzeug und gezogenem Fahrzeug, insbesondere bezogen auf die Verbraucher, ermöglicht. Bei der Verbindung von elektrischen Steckverbindern kann es zu Spannungsspitzen oder sogar Spannungsbögen und Funkenbildung kommen, wenn bereits Verbraucher aktiv sind. Spannungsspitzen können elektrische Systeme schädigen und sollen vermieden werden. Sind mehrere Verbraucher aktiv, können sich mehrere Spannungsspitzen sogar addieren. Hinsichtlich Spannungsbögen und Funkenbildung ist es sogar noch wichtiger, dass diese vermieden werden, da sie an den Fahrzeugen oder der Ladung Schäden anrichten können und insbesondere bei Gefahrguttransporten eine erhebliche Gefährdung darstellen. Werden die Verbraucher vor dem Verbinden deaktiviert, so können Spannungsspitzen, Spannungsbögen und Funkenbildung vermieden werden. Dieses Vorgehen ist besonders bei dem Stecken der Hochspannungsleitung von Vorteil.

Das erfindungsgemäße System ermöglicht ferner, dass zwischen dem Zugfahrzeug und einem bestimmten gezogenen Fahrzeug in manchen Fällen nicht sämtliche der eigentlich für diese Kombination von Zugfahrzeug und gezogenem Fahrzeug vorgesehenen Verbindungen hergestellt werden. Beispielsweise kann für eine Rangierfahrt nur ein Teil der möglichen Verbindungen hergestellt werden. Hierdurch wird der Verbindungsvorgang kürzer, was eine Zeitersparnis darstellt. Bei einer Rangierfahrt kann beispielsweise auf eine Übertragung von Hochspannung verzichtet werden, da es nicht unbedingt notwendig ist, elektrische Energie einer Rekuperation zu übertragen. In anderen Fällen kann möglicherweise auf die Datenleitung verzichtet werden, da für die Rangierfahrt kein Datenaustausch zwischen Zugfahrzeug und gezogenem Fahrzeug notwendig ist.

Die Erfindung wird anhand der Zeichnungen beispielhaft dargestellt und erläutert. Die nachfolgend aufgeführten Figuren sind in den Zeichnungen dargestellt:
- Figur 1: eine schematische Darstellung eines Gespanns
- Figur 2: das Detail A der Figur 1
- Figur 3: das Detail B der Figur 1
- Figur 4: das Detail C der Figur 1

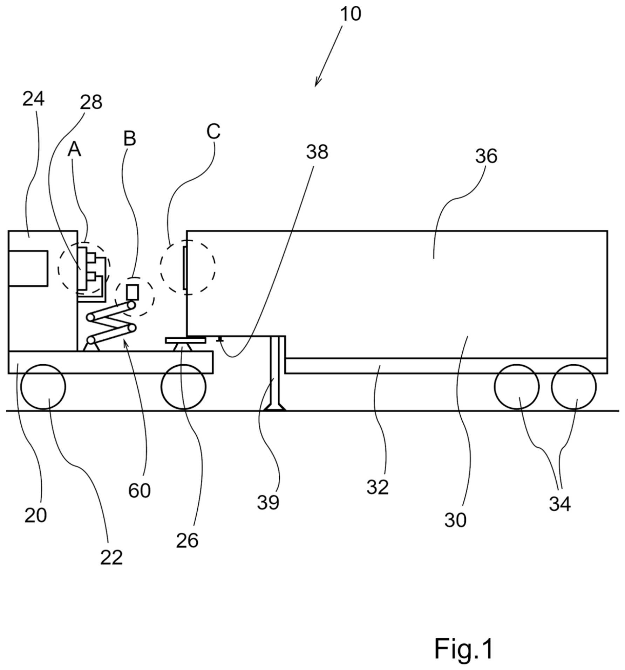

Das in der Figur 1 dargestellte Gespann 10 umfasst einen Sattelschlepper als Zugfahrzeug 20 und einen Sattelauflieger als gezogenes Fahrzeug 30. Die Figur 1 zeigt das Gespann 10 während des mechanischen Kupplungsvorgangs von Zugfahrzeug 20 und Sattelauflieger.

Das Zugfahrzeug 20 umfasst ein Fahrwerk und einen Aufbau. Das Fahrwerk umfasst Räder 22 sowie einen nicht dargestellten Antrieb. Im vorderen Bereich des Zugfahrzeugs 20 ist eine Fahrerkabine 24, im hinteren Bereich eine Sattelkupplung 26, vorgesehen.

Das gezogene Fahrzeug 30 umfasst ein Chassis 32, an welchem Räder 34 angeordnet sind. Auf dem Chassis 32 ist ein Koffer 36 zur Aufnahme von Transportgut angeordnet. Der Sattelauflieger weist im vorderen Bereich einen Königszapfen 38 auf. Um den Sattelauflieger abzustützen, wenn dieser nicht mit einem Zugfahrzeug 20 verbunden ist, umfasst der Sattelauflieger aus- und einfahrbare Stützwinden 39.

Bei dem in Figur 1 dargestellten Zustand ist das Zugfahrzeug 20 bereits teilweise unter den Sattelauflieger gefahren und wird im weiteren Verlauf des mechanischen Kupplungsvorgangs weiter rückwärts bewegt, bis der Königszapfen 38 in der Sattelkupplung 26 aufgenommen ist. Die Stützwinden 39 sind ausgefahren, da das Zugfahrzeug 20 den Sattelauflieger noch nicht vollständig abstützt.

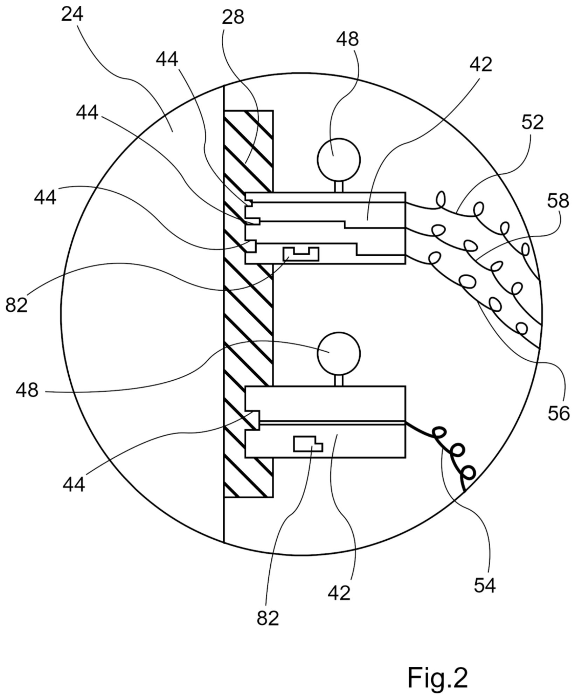

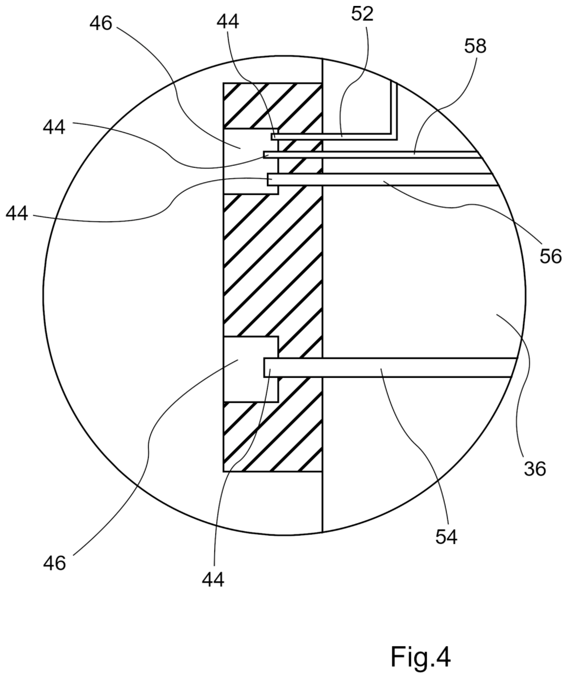

An einer Rückseite der Fahrerkabine 24 ist ein Haltepaneel 28 vorgesehen. Das Zugfahrzeug 20 umfasst mehrere Stecker 42 (siehe Figur 2), die mit Steckbuchsen 46 des Aufliegers (siehe Figur 4) verbunden werden können.

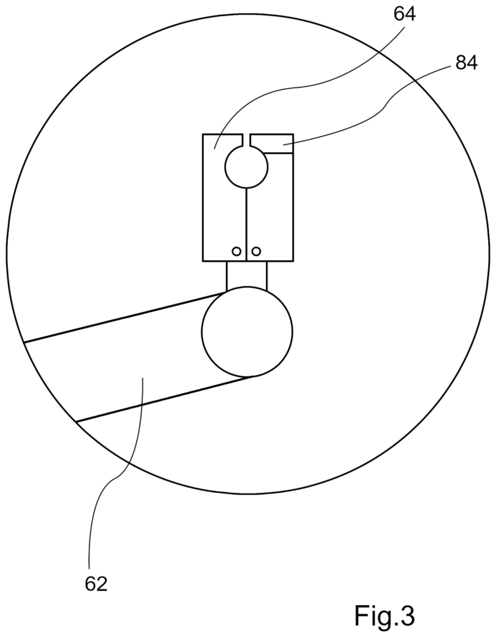

Das Zugfahrzeug 20 umfasst ferner eine Handhabungseinrichtung 60 in Form eines Gelenkarmroboters. Bei der hier gezeigten Ausführungsform ist die Handhabungseinrichtung 60 zwischen der Fahrerkabine 24 und der Sattelkupplung 26 angeordnet. Die Handhabungseinrichtung 60 umfasst einen Roboterarm 62 und einen Greifer 64, der an dem vorderen Ende des Roboterarms 62 angeordnet ist (siehe Figur 3).

Die Stecker 42 weisen jeweils einen Grundkörper auf, an welchem ein identischer Halter 48 angebracht ist. Die Halter 48 und der Greifer 64 sind komplementär zueinander ausgestaltet. Der Greifer 64 kann zu jedem Zeitpunkt maximal einen der Halter 48 greifen und somit maximal einen der Stecker 42 handhaben.

An den einen Stecker 42 sind drei Leitungen angeschlossen, eine Datenleitung 52, eine Pneumatikleitung 56 und eine Niederspannungsleitung 58. Dieser Stecker 42 weist vier Steckverbinder 44 auf, die mit jeweils einer der Leitungen verbunden sind und eine Übertragung des jeweiligen Mediums ermöglichen. An dem anderen Stecker 42 ist nur eine Hochspannungsleitung 54 und ein dazugehöriger Steckverbinder 44 vorgesehen. Die Leitungen sind als Spiralleitungen ausgeführt.

Jeder der Stecker 42 weist einen RFID-Chip 82 als Codierung auf. Durch die RFID-Chips 82 sind die Stecker 42 voneinander unterscheidbar.

Das Haltepaneel 28 stellt nur eine Möglichkeit zur Zwischenlagerung der Stecker 42 dar. In dem Haltepaneel 28 sind keine Anschlüsse für eine Übertragung von Medien vorgesehen.

Der Greifer 64 umfasst zwei Hälften (siehe Figur 3). Die beiden Hälften sind verschwenkbar und können so die Halter 48 umgreifen. Wenn der Greifer 64 einen Halter 48 umgreift, sind Greifer 64 und Halter 48 als Haltemittel temporär miteinander verbunden, hier durch einen Formschluss. Die Handhabungseinrichtung 60 kann dann den zugehörigen Stecker 42 handhaben, also unter Anderem von dem Haltepaneel 28 entnehmen und zu dem Sattelauflieger hinbewegen.

An dem Sattelauflieger sind zwei Steckbuchsen 46 vorgesehen (siehe Figur 4). Eine der Steckbuchsen 46 weist drei Steckverbinder 44 auf, die an drei Leitungen, eine Datenleitung 52, eine Pneumatikleitung 56 und eine Niederspannungsleitung 58 angeschlossen sind. Wird der passende Stecker 42 in der Steckbuchse 46 angeordnet, so werden die Datenleitungen 52, die Pneumatikleitung 56 und die Niederspannungsleitung 58 von Zugfahrzeug 20 und Sattelauflieger miteinander verbunden. Dadurch wird eine Übertragung von Daten, Druckluft und elektrischer Energie mittels Niederspannung ermöglicht. Die zweite Steckerbuchse 46 des Sattelaufliegers weist einen Steckverbinder 44 auf, der mit einer Hochspannungsleitung 54 verbunden ist. Wird der passende Stecker 42 in der Steckerbuchse 46 angeordnet, so werden die Hochspannungsleitungen 54 von Zugfahrzeug 20 und Sattelauflieger miteinander verbunden. Dadurch ist eine Übertragung von elektrischer Energie mittels Hochspannung möglich.

Die Steckbuchsen 46 müssen nicht zwingend Vertiefungen sein. Bei anderen Ausführungsformen können auch die Stecker eine Vertiefung aufweisen, in welche ein Vorsprung als Steckbuchse 46 hineinragt. Entscheidend ist in jedem Fall nur, dass Stecker 42 und Steckbuchse 46 durch einen Steckvorgang temporär miteinander verbunden werden können.

Die Stecker 42 werden von der Handhabungseinrichtung 60 zu den Steckbuchsen 46 bewegt und dort hineingesteckt. Danach kann der Greifer 64 sich öffnen, wodurch die temporäre Verbindung von Greifer 64 und Halter 48 des jeweiligen Steckers 42 getrennt wird. Im Anschluss kann der Greifer 64 einen weiteren Stecker aufnehmen.

Der Greifer 64 umfasst einen Sensor 84. Der Sensor 84 kann die Codierung, hier die RFID-Chips 82, erfassen. Eine Steuereinheit (nicht dargestellt) kann dann beispielsweise anhand einer Datenbank ermitteln, welche Steckverbindungen der Stecker mit der erfassten Codierung umfasst.

### Bezugszeichenliste

- 10: Gespann

- 20: Zugfahrzeug
- 22: Rad
- 24: Fahrerkabine
- 26: Sattelkupplung
- 28: Haltepaneel

- 30: gezogenes Fahrzeug
- 32: Chassis
- 34: Rad
- 36: Koffer
- 38: Königszapfen
- 39: Stützwinde

- 42: Stecker
- 44: Steckverbinder
- 46: Steckbuchse
- 48: Halter

- 52: Datenleitung
- 54: Hochspannungsleitung
- 56: Pneumatikleitung
- 58: Niederspannungsleitung

- 60: Handhabungseinrichtung / Gelenkarmroboter
- 62: Roboterarm
- 64: Greifer

- 82: RFID-Chip
- 84: Sensor

## Patentansprüche

1. Zugfahrzeug mit einem Fahrwerk und einem Aufbau sowie einer Mehrzahl von Steckverbindern zur Übertragung jeweils eines Mediums zwischen dem Zugfahrzeug und einem gezogenen Fahrzeug,
**dadurch gekennzeichnet,**
**dass** die Steckverbinder zu mehreren separaten Steckern zusammengefasst sind, die mit Steckbuchsen des gezogenen Fahrzeugs verbunden werden können, wobei die Anzahl der Stecker kleiner ist als die Anzahl der Steckverbinder, und
**dass** das Zugfahrzeug eine Handhabungseinrichtung umfasst, die eingerichtet ist, die Stecker einzeln handzuhaben.

2. Zugfahrzeug nach Anspruch 1,
**dadurch gekennzeichnet,**
**dass** die Handhabungseinrichtung und die Stecker komplementäre Haltemittel umfassen, mittels denen die Handhabungseinrichtung temporär mit jeweils einem einzigen Stecker verbunden werden kann, wobei die Haltemittel bevorzugt mechanische und/oder magnetische Haltemittel sind.

3. Zugfahrzeug nach Anspruch 2,
**dadurch gekennzeichnet,**
**dass** die Stecker identische Haltemittel aufweisen, insbesondere in Form einer Kontur oder Teilkontur.

4. Zugfahrzeug nach Anspruch 2 oder 3,
**dadurch gekennzeichnet,**
**dass** die Stecker, insbesondere die Haltemittel, eine Codierung, insbesondere einen RFID-Chip, einen QR-Code, eine mechanische Codierung und/oder eine magnetische Codierung, umfassen.

5. Zugfahrzeug nach einem der vorhergehenden Ansprüche,
**dadurch gekennzeichnet,**
**dass** die Medien Druckluft, Hydraulikflüssigkeit, Daten und/oder elektrische Energie, insbesondere Energie eines Bordnetzes (12 V DC und/oder 24 V DC) und/oder Energie mit Hochspannung (>230 V AC/DC) sind.

6. Zugfahrzeug nach einem der vorhergehenden Ansprüche,
**dadurch gekennzeichnet,**
**dass** mindestens ein Stecker zur Übertragung mehrerer unterschiedlicher Medien ausgebildet ist, wobei bevorzugt mindestens ein Stecker ausschließlich Steckverbinder zur Übertragung von Hochspannung aufweist.

7. Zugfahrzeug nach einem der vorhergehenden Ansprüche,
**dadurch gekennzeichnet,**
**dass** die Stecker hinsichtlich des übertragenen Mediums und/oder hinsichtlich ihrer Steckverbinder unterschiedlich ausgestaltet sind.

8. Zugfahrzeug nach einem der vorhergehenden Ansprüche,
**dadurch gekennzeichnet,**
**dass** die Übertragung der Energie mit Hochspannung und die Datenübertragung durch zwei unterschiedliche Stecker erfolgt.

9. Zugfahrzeug nach einem der vorhergehenden Ansprüche,
**dadurch gekennzeichnet,**
**dass** die Handhabungseinrichtung einen Gelenkarmroboter mit einem Greifer umfasst.

10. Kombination aus mehreren Steckern und einer Handhabungseinrichtung wie in einem der vorhergehenden Ansprüche definiert.

11. Verfahren zum Herstellen einer Medienverbindung zwischen einem Zugfahrzeug nach einem der Anspruch 1 bis 9 und einem gezogenen Fahrzeug, wobei die Stecker nacheinander von der Handhabungseinrichtung mit Steckbuchsen des gezogenen Fahrzeugs verbunden werden.

12. Verfahren nach Anspruch 11,
**dadurch gekennzeichnet,**
**dass** als erstes ein Stecker mit dem gezogenen Fahrzeug verbunden wird, der eine Datenübertragung zwischen Zugfahrzeug und gezogenem Fahrzeug ermöglicht.

13. Verfahren nach Anspruch 12,
**dadurch gekennzeichnet,**
**dass** nach dem Ermöglichen der Datenübertragung in Abhängigkeit von Daten, welche von dem gezogenen Fahrzeug an das Zugfahrzeug übermittelt werden, festgelegt wird, welche Stecker im Anschluss und in welcher Reihenfolge mit dem gezogenen Fahrzeug verbunden werden.

14. Verfahren nach Anspruch 12 oder 13,
**dadurch gekennzeichnet,**
**dass** nach dem Ermöglichen der Datenübertragung einzelne oder alle Verbraucher elektrischer Energie mittels der Datenübertragung deaktiviert werden und danach ein Stecker mit dem gezogenen Fahrzeug verbunden wird, der eine Übertragung von elektrischer Energie zwischen Zugfahrzeug und gezogenem Fahrzeug ermöglicht.

15. Verfahren nach einem der Ansprüche 11 bis 14,
**dadurch gekennzeichnet,**
**dass** für eine Rangierfahrt nur ein Teil der möglichen Verbindungen hergestellt wird.
